Europäisches Patentamt

**European Patent Office**

Office européen des brevets

(11) Publication number: **0 247 081 B1**

# EUROPEAN PATENT SPECIFICATION

(45) Date of publication of patent specification:
**12.06.91 Bulletin 91/24**

(51) Int. Cl.⁵: **H04J 7/00, H04L 5/04, H04N 11/00**

(21) Application number: **86906406.3**

(22) Date of filing: **03.11.86**

(86) International application number:
**PCT/GB86/00677**

(87) International publication number:
**WO 87/02849 07.05.87 Gazette 87/10**

(54) INFORMATION TRANSMISSION SYSTEM, ENCODER AND DECODER.

(30) Priority: **01.11.85 GB 8527006**

(43) Date of publication of application:
**02.12.87 Bulletin 87/49**

(45) Publication of the grant of the patent:
**12.06.91 Bulletin 91/24**

(84) Designated Contracting States:
**AT BE CH DE FR GB IT LI LU NL SE**

(56) References cited:
**US-A- 2 819 336**

(73) Proprietor: **ELECTRONIC DISPLAY TECHNOLOGY LIMITED**
**158 Camberwell Road**
**London SE5 OEE (GB)**

(72) Inventor: **CURTIS, Clive, Ronald**
**28 Slades Garden**
**Enfield Middlesex (GB)**
Inventor: **WAKEMAN, Clifford, John**
**5 Strangford Road Tankerton**
**Whitstable Kent (GB)**

(74) Representative: **Robinson, John Stuart**
**MARKS & CLERK 57/60 Lincoln's Inn Fields**
**London WC2A 3LS (GB)**

EP 0 247 081 B1

## Description

The present invention relates to information transmission, more particularly to a system for carrying information. One application of the invention is to the transmission of signals to visual display units such as high resolution colour monitors using optical fibres, coaxial cables, etc. as transmission media.

The terms "source", "receiver", and "channel" as used herein are defined as follows :

source — a device or apparatus capable of producing, generating or transmitting discrete colour video information ;

receiver — a device or apparatus capable of receiving discrete colour video information ;

channel — a medium used for the interconnection of source and receiver ; the medium being of any type and length dependant on the criteria for selection, eg coaxial cable or fibre-optic system.

Colour video information is invariably produced by a source in a time related form of the discrete primary colours red (R), green (G) and blue (B) together with synchronisation signals (syncs) generated for the vertical and horizontal positioning of the colour information on the screen. The syncs may be provided in a composite form, separated as horizontal and vertical syncs denoted HS and VS respectively, or added in a composite form to the green video information.

In order to connect a source to a receiver for the transmission of colour video information, there is a requirement of three to five interconnecting channels and an additional channel is required for intensity control.

This interconnection requirement poses few problems if any when both devices are in close proximity. However the increasing demand for distributed colour information transmission at distances of tens of metres to several kilometres between source and receiver creates a number of problems. For instance, incorrect colour decoding may take place in the receiver due to phase or delay differences of the Red, Green, Blue and Intensity signal paths or channels. Also substantial signal deterioration may be suffered and be incorrectable due to substantial characteristic variation between the channels. Further, cable or channel densities in multiple source-receiver environments may be physically too large to accommodate, too heavy to support or financially unviable.

A further requirement of colour video transmission is the ability to switch any source to any receiver. The 'switch' may be electronic or mechanical but produces the same undesirable signal transmission characteristics as a channel. Also, increasing the density of interconnection becomes prohibitive as the number of sources and/or receivers increases.

In order to transmit colour video signals by means of a single channel, some form of encoding must be used. Historically, broadcast (television picture) colour video transmission in a single channel has been achieved by encoding fundamentally in the frequency domain. A reference sinusoidal signal burst is generated at the beginning of each display line. A chrominance (chroma) signal, whose phase relationship to the reference defines the hue of the colour, is generated in real-time within the display line. The intensity or saturation (the amount of dilution by white light present) signalling is provided by the peak-to-peak amplitude of the sinusoidal chroma signal.

The disadvantage with this particular system is that it is incapable of transmitting medium to high quality colour information. In fact, under close scrutiny, this system is barely able to handle broadcast applications but for the illusion cast by the human eye.

Fundamentally this is because the chrominance information has a restricted bandwidth of approximately 3 MHz, which constrains the amount of information it can carry. Differences in the frequencies between the chronimance and luminance information introduce various interference patterns and definition reatrictions inherent in the encoding-decoding process.

It is known from U.S. patent no. 2,819,336 to provide an information transmission system using amplitude division multiplexing.

By performing multiplexing in the amplitude domain, it is possible to make use of a single channel for transmitting a plurality of signals, such as RGB signals, syncs, and intensity control information or attributes of a high resolution colour video signal.

The problems involved in transmitting discrete signals for red, green, blue, vertical sync, horizontal sync and intensity control on different channels such as those associated with different phase-delays can be overcome as all parameters of the signal are subject to the same delay. Signal distortion can be corrected since the transmission channel has the same effect on all parameters of the signal. Since the transmission interconnections can be reduced to a single channel, reductions in interconnection of the order of 66-83.34% can be achieved depending on the type of video source generation.

According to the present invention there is provided an encoder having

2

In a simple encoding scheme, the RGB TTL signals are rearranged into a weighted form whereby all of the primary and secondary colours are uniquely represented in the amplitude domain by the following mappings :

$$f_1 : B \rightarrow x^n + c$$
$$f_2 : R \rightarrow y^{n+p} + c$$
$$f_3 : G \rightarrow z^{n+q} + c$$

where $\underline{x}$, $\underline{y}$, $\underline{z}$, $\underline{n}$, $\underline{p}$, and $\underline{q}$ are real numbers and $\underline{c}$ is an arbitrary constant. Thus the secondary colour representation becomes :

White $= x^n + y^{n+p} + z^{n+q} + c$
Yellow $= y^{n+p} + z^{n+q} + c$
Cyan $= x^n + z^{n+q} + c$
Magenta $= x^n + y^{n+p} + c$
Black $= c$

The assignment of primary colour to function is arbitrary but the decoding process is simplified if an efficient or linear mapping is selected. To ensure 'uniqueness', the elements of the set of real numbers should be carefully chosen, for instance so that :

$$4x^n = 2y^{n+p} = z^{n+q}$$

In a practical example, the 'unit' or smallest value ($x^n$) can be represented by some voltage and in turn what were discrete but time related RGB TTL signals can be represented in the amplitude or voltage domain. The video black level is defined by $\underline{c}$. For example let $c = 1$ volt and the unit value $= 200$ mV.
Since $4x^n = 2y^{n+p} = z^{n+q}$
then $y^{n+p} = 2x^n = 400$ mV and $z^{n+q} = 4x^n = 800$ mV
By substitution in the preceding colour equations we can derive the voltages which represent the primary and secondary colours in the amplitude domain :

```
White     = 200mV + 400mV + 800mV + 1v = 2.4 volts

Yellow    =         400mV + 800mV + 1v = 2.2 volts

Cyan      = 200mV +         800mV + 1v = 2.0 volts

Green     =                 800mV + 1v = 1.8 volts

Magenta   = 200mV + 400mV         + 1v = 1.6 volts

Red       =         400mV         + 1v = 1.4 volts

Blue      = 200mV                 + 1v = 1.2 volts

Black     =                         1v = 1.0 volt
```

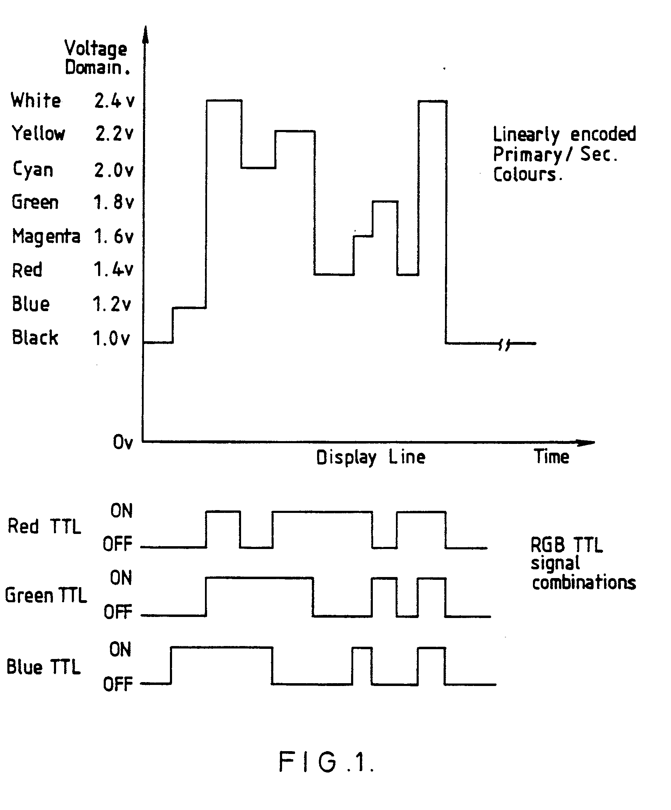

Figure 1 illustrates this scheme of encoding colour information from separate RGB TTL channels into a single channel.

An extension of this encoding scheme may be applied to sources which produce RGB signals in an analogue form (RGB ANAL) ie more than 'two-states' for each primary signal. Using the same weighting as in the previous scheme, the RGB ANAL signal amplitudes may be defined within the encoding system by the following relations :

$$f_1(B) \leq x^n + c$$
$$x^n + c < f_2(R) \leq y^{n+p} + c$$
$$y^{n+p} + c < f_3(G) \leq z^{n+q} + c$$

a plurality of inputs for receiving a plurality of input signals (R, G, B, HS, VS, I) ;

an output for providing an encoded output signal, such that the encoder is arranged to perform amplitude division multiplexing of the input signals so as to provide the encoded output signal ;

means for performing a mapping comprising

$$f_1(A_1) + f_2(A_2) + f_3(A_3)$$

of the input signals into the voltage domain

where $A_1$, $A_2$, $A_3$ are video primary colour signals (B, R, G respectively) and are for controlling illumination of sequentially illuminated discrete colour image elements and $f_1$, $f_2$ and $f_3$ are isomorphic functions with non-intersecting images ; and

means for mapping an intensity control signal (I) to an image, which does not intersect the images of $f_1$, $f_2$, and $f_3$, during a plurality of discrete time periods, characterised in that

said encoder further comprises a time delay circuit arranged to delay the video primary colour signals (R, G, B) prior to amplitude division multiplexing and the mapping means is arranged to map the intensity control signal during the delay period of the time delay circuit following the start of each discrete colour image element.

Greater colour control may be achieved by selectively blanking some image elements, such as alternate image elements, where some loss of image resolution is permissible.

The invention will be further described, by way of example, with reference to the accompanying drawings, in which :

Figure 1 is a diagram illustrating all possible combinations of RGB TTL input signals and the resulting output signal for a basic amplitude division multiplex system constituting a preferred embodiment of the invention;

Figure 2 is a diagram similar to that of Figure 1 for analog or multi-state RGB input signals ;

Figure 3 is a diagram illustrating RGB and intensity input signals of binary or TTL type ;

Figure 4 is a diagram of an encoded signal including sync signals ;

Figure 5 is a block diagram of a system constituting a preferred embodiment of the invention ;

Figure 6 is a block circuit diagram of part of the system of Figure 5 ;

Figure 7 is a diagram illustrating decoding of a transmitted encoded signal based on RGB TTL input signals;

Figure 8 is a diagram illustrating decoding in the presence of overshoot and undershoot ;

Figure 9 is a block circuit diagram of another part of the system of Figure 5 ;

Figure 10 is a block circuit diagram of the signal converter/conditioner of Figure 9 ;

Figure 11 is a block circuit diagram of the signal decoder of Figure 9 ;

Figure 12 illustrates a waveform which may be used to provide intensity or attribute control ;

Figure 13 is a block circuit diagram of a modified converter/conditioner ;

Figure 14 is a block circuit diagram of a modified signal decoder ;

Figure 15 is a block circuit diagram of a modified encoder ;

Figure 16 shows waveforms illustrating image intensity switching with respect to the signal from the encoder of Figure 15 ; and

Figure 17 is a block circuit diagram of another modified signal decoder.

For the purpose of explanation, various amplitude division multiplex schemes will be described with reference to encoding of RGB type colour video signals.

In many applications, the source of colour video signals produces discrete primary colour signals which may be considered as 'two state' or binary quantities represented by TTL levels or states. The combinations of the states of the RGB signals used to represent both primary and secondary colours are as follows :

| Primary/Secondary Colour Representation | RGB TTL States | | |
|---|---|---|---|
| | Red | Green | Blue |
| Black | OFF | OFF | OFF |
| Blue | OFF | OFF | ON |
| Red | ON | OFF | OFF |
| Green | OFF | ON | OFF |
| White | ON | ON | ON |
| Yellow | ON | ON | OFF |
| Cyan | OFF | ON | ON |
| Magenta | ON | OFF | ON |

where White $= x^n + y^{n+p} + z^{n+q} + c$

and.Black $= c$

Obviously the use of such a scheme provides for transmission of an extensive palette of 'colour', the palette size (number of different hue/saturation levels) being a function of the number of 'states' in each RGB ANAL signal. If each signal has the same number of states $\underline{s}$, then the total number of different hue/saturation levels which can be transmitted by the system is a function of $\underline{s}$.

The mappings $f_1$ to $f_3$ of the RGB ANAL signals may be rewritten, since the number of images generated $(fa(b))$ is dependent on 's', as follows :

$$f_1 : B \to x^n \cdot s^{-1} + c$$
$$f_2 : R \to y^{n+p} \cdot s^{-1} + c$$
$$f_3 : G \to z^{n+q} \cdot s^{-1} + c$$

where $\underline{s}$ is a positive integer,

White $= x^n + y^{n+p} + z^{n+q} + c$

Black $= c$

For example, when $\underline{s} = 4$, the following distinct images can be generated from each primary signal :

$$f_1(B) \to c, (x^n/3) + c, (2x^n/3) + c, x^n + c$$
$$f_2(R) \to c, (y^{n+p}/3) + c, (2y^{n+p}/3) + c, y^{n+p} + c$$
$$f_3(G) \to c, (z^{n+q}/3) + c, (2z^{n+q}/3) + c, z^{n+q} + c$$

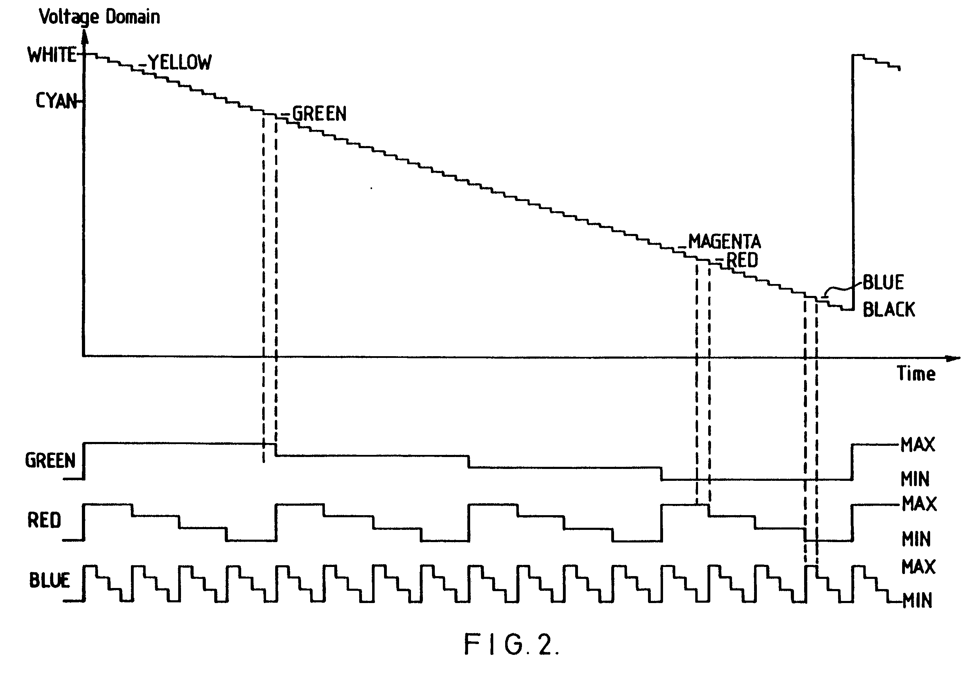

Consequently the total combinational sums of these images allows us to generate 64 different representations of hue/saturation levels. A simplified illustration of this encoding scheme is shown in Figure 2.

This encoding scheme allows an illusion of colour change to take place in certain receivers, particularly colour monitors, by modulating the colour primaries. The method deliberately exploits the monitor display performance limitation and can produce quite an extensive palette of colour even from an RGB TTL source. It is achieved by pulse-width modulating the primary colour signals so that their active period is substantially shorter than the minimum 'pixel time' required by the monitor. This technique coupled with alternately blanking every other pixel is capable of producing 64 different colours from an RGB TTL source.

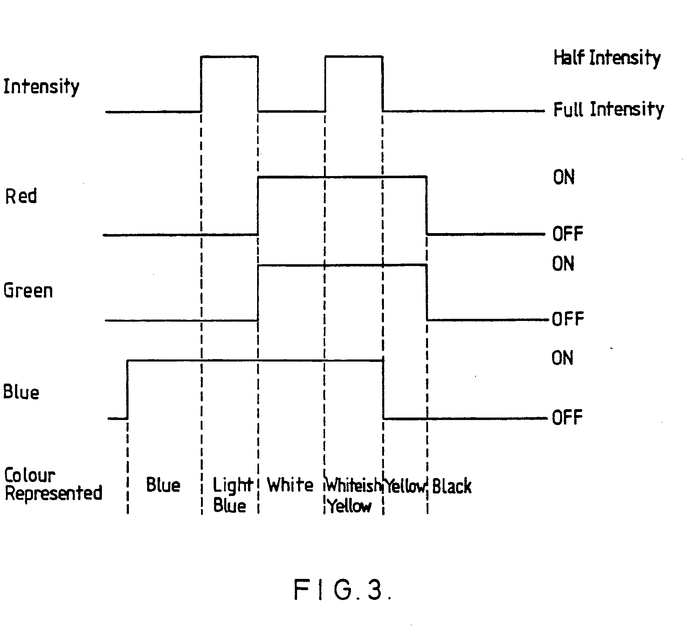

Some sources provide a separate single control output referred to as 'intensity' whose state determines the level of saturation of the primary colours active at the same time as the intensity signal. Currently this scheme is available with sources producing RGB TTL signals, the intensity being provided by a binary signal, enabling full or half intensity (saturation) control as shown in Figure 3.

Two state intensity signals may be handled in the same way as the RGB TTL signals ie amplitude division multiplexing four TTL input channels instead of three. However, by using multi-state signals in modified colour video signal sources, video colour information in the source may be stored more efficiently and handled far quicker than that of an RGB ANAL source providing the same palette capability.

This is achieved by generating an analogue intensity control, retaining the RGB TTL signals. Applying the principles described hereinbefore, the implementation as follows :

$$f_0 : i \to w^n \cdot s^{-1} + c$$
$$f_1 : B \to x^{n+p} + c$$
$$f_2 : R \to y^{n+q} + c$$
$$f_3 : G \to z^{n+r} + c$$

where $\underline{i}$ = intensity, $\underline{s}$ = number of states in the intensity signal, $\underline{s}$ is a positive integer, $\underline{w}$, $\underline{x}$, $\underline{y}$, $\underline{z}$, $\underline{n}$, $\underline{p}$, $\underline{q}$, and $\underline{r}$ are real numbers.

White $= w^n + x^{n+p} + y^{n+q} + z^{n+r} + c$

Black $= c$

A sufficient condition for uniqueness is : $s \cdot w^n = 4x^{n+p} = 2y^{n+q} = z^{n+r}$

The following distinct images are generated from each signal :

$$f_0(i) \to c, (w^n \cdot s^{-1}) + c, (2w^n \cdot s^{-1}) + (a \cdot w^n \cdot s^{-1}) + c$$
$$f_1(B) \to c, x^{n+p} + c$$
$$f_2(R) \to c, y^{n+q} + c$$
$$f_3(G) \to c, z^{n+r} + c$$

where $\underline{a}$ is an integer between 1 and $\underline{s}$

The total combinational sums of these images (or different hue/saturation levels which may be represented) is merely a function of the number of states provided in the intensity signal.

The encoding scheme provides for any further addition of video attributes merely by generating mappings for each source signal so that the combinational sums of the images of each mapping produce unique points in the amplitude domain.

A characteristic of Vertical (VS) and Horizontal (HS) syncs in the generation of video information is that their occurrence overrides any other signal activity produced by the primaries (RGB), intensity or other attributes. However, strictly speaking, such a situation should never occur. Equally the very purpose of sync information ensures that HS and VS occur at different points in time. It is therefore possible to provide a mapping for VS and HS onto the same image plane in the amplitude domain providing :

(i) the decoding process is able to differentiate between them ; invariably the period of VS is much greater than that of HS providing time discrimination as a means of differentiation ;

(ii) the receiver is capable of accepting a composite sync (VS + HS), eg a colour monitor.

Failing either of these criteria, distinct images (separate mappings) can be generated for both VS and HS.

There are certain restrictions which must be placed on the mappings for VS and HS which are instrinsically due to features of the decoding process. Firstly to ensure that spurious colour decoding does not take place, the syncs should not be mapped into the image space bounded by the primary colour images. Secondly, unless some special insertion signal is provided, the sync tips are used for clamping the encoded signal within the decoding process. Therefore assuming VS and HS map to the same image f(S), the following conditions on sync are imposed for the RGB TTL/ANAL signals.

$$f(S) < c < f(B)$$

or

$$f(S) > c > f(B) + f(R) + f(G)$$

and in the case of RGB TTL plus multi-state intensity signals :

$$f(S) < c < f(i)$$

or

$$f(S) > c > f(i) + f(B) + f(R) + f(G)$$

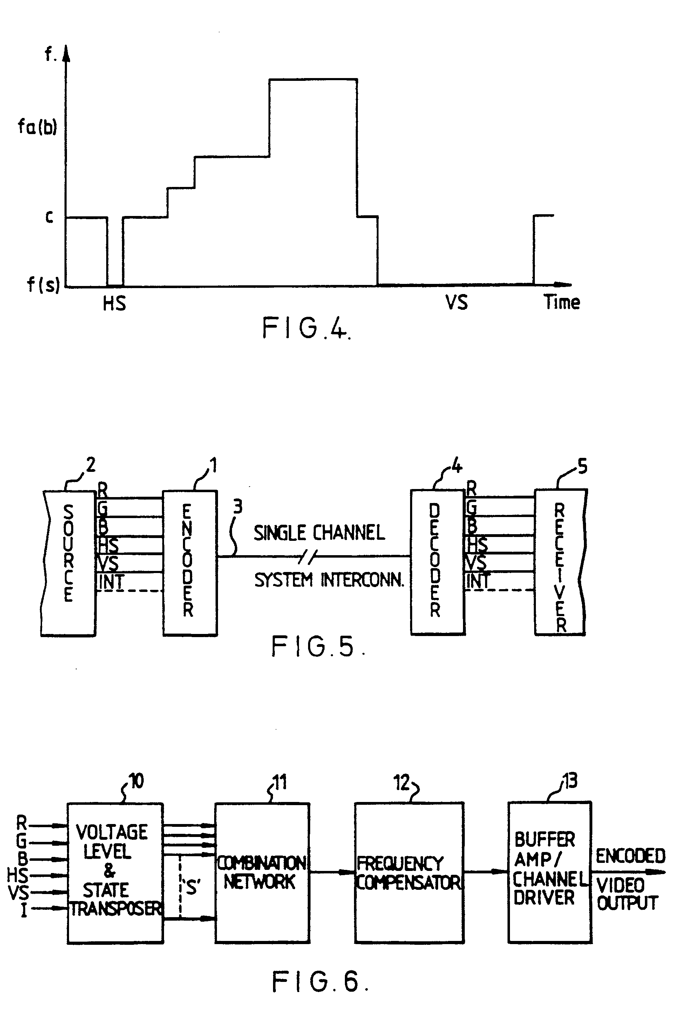

Figure 4 illustrates an encoded signal where $f(S) < c$.

The amplitude of sync ($|f(S) - c|$) is used to provide gain control of the encoded waveform in the decoding process. Therefore it is useful to establish a relationship between this and the total colour video amplitude.

Figure 5 is a block schematic diagram of an information transmission system constituting a preferred embodiment of the invention for use in transmitting colour video signals. The system comprising an encoder 1 which receives RGB signals, sync signals HS and VS. and in some cases an intensity signal INT from a source 2. The encoder performs amplitude division multiplexing of the signals and supplies the resultant encoded signal to a single channel system interconnection 3. The interconnection 3 may be electrical, for instance coaxial cable, or may be a fibre optic system.

A decoder 4 receives the encoded signal from the interconnection 3 and performs voltage division demultiplexing so as to supply the original signals on separate channels or lines to a receiver 5. In the case of a system used for sending colour video signals from one or more sources to a plurality of receivers, electronic or mechanical switches are included within the system interconnection 3 and the interconnection elements form a network suitable for performing the distribution of signals. However, the system permits the use of a single channel, which may be a single coaxial cable or single optical fibre, as opposed to between three and six channels (coaxial cables or optical fibres) which will be necessary without the encoder 1 and the decoder 4. The bandwidth of the single channel need only be as large as that of the input channel of largest bandwidth. For instance, in the case where no intensity signal INT is used, the bandwidth of the single channel need be no larger than that of each of the R, G, and B input signal channels. In the case where the intensity signal is used, it will normally require a larger bandwidth than any of the R, G, and B signals, so that the bandwidth of the single channel must be sufficient to pass the intensity signal. This contrasts with conventional forms of multiplexing in which the bandwidth of the multiplexed signal, and hence of the channel carrying it, must be many times that of each input signal. Thus, the cost, complexity, weight and space requirement can be reduced to as little as one sixth of those of a conventional colour video signal distribution network.

Figure 6 is a block circuit diagram of the encoder 1 of Figure 5. The encoder comprises a voltage level and state transposer 10 which effectively transforms the time or duration information of each of its inputs, which receive the input signals from the source 2, into its respective mapping, of which there are s. These mappings are supplied to a combination network 11 which routes the mappings to their respective images and sums these images so as to provide an encoded output signal which is multiplexed in the voltage domain. Depending on the actual type of channel or interconnection being used, the encoded signal may then be supplied to a frequency compensator 12 for frequency conditioning. The signal from the compensator is supplied to a buffer amplifier/channel driver 13 for interfacing to the channel interconnection. The amplifier/driver 13 may be a fibre optic transmitter circuit if the transmission medium is a fibre optic cable or may be an emitter-follower amplifier for a coaxial cable.

The aspect of signal encoding is relatively simple in comparison with the decoding process. The 'identity' of the encoded waveform must be incorporated in some way to decode the encoded signal. The identity is referred to as the set of mappings ga(b), which are effectively inverse-mappings from the voltage domain back to their respective discrete time-related signals.

Because the encoding is based on unique mappings into the amplitude (voltage) domain, it follows that the identity must relate to the functions utilised in the mapping of RGB, Sync. Intensity and any other attribute used.

Therefore generally fa(b) $\rightarrow$ ga(b) describes the relationship between an encoded function and it's corresponding image (or identity) which is used in the decoder to detect the transmitted image.

For example if :    $f_1 : B \rightarrow x^n + c$
then                       $g_1^{-1} : B \rightarrow x^n + c$

The implementation of this coding scheme presents a number of practical problems which can only be alleviated within the decoding scheme and which include :

(i) inaccuracies and errors incurred in producing and transmitting the encoded signal ;

(ii) constraints placed upon the encoding domain by the transmission channel ;

(iii) the accuracy with which the images may be recognised in the decoder ;

(iv) temperature stability of the decoder.

The problem of confinement in the voltage domain ((ii) above) may be simply overcome by applying gain or attenuation to the signal received at the decoder so that the signal amplitude is maintained suitably for the 'Image-to-State' conversion. In effect automatic gain control is applied to the incoming signal. The amount of gain or attenuation is referred to as the scaling factor (K), which may be determined by $|f(S) - c|$, since this has a direct relationship with the space bound by the images. Thus :

$$K \cdot fa(b) \rightarrow ga(b)$$

The problems of (i), (ii) and (iv) may be alleviated by placing tolerances on the images decoded in the voltage domain. The amount of tolerance or absolute error bound E is a function of the 'unit' value u used in the encoding process :

ie for RGB TTL, $u = x^n$
and for RGB ANAL, $u = x^n/s$

To ensure 'uniqueness' in decoding, non-overlapping boundaries are required for every image generated by the primary mappings, so that $E < u/2$. In practice, due to electronic characteristics of the encoded signal, it is necessary for $E << u/2$. This is necessary because of high frequency ringing or overshoot which may occur in the encoded signal, causing decoding errors when the peaks break through adjacent boundaries.

From these requirements, the image spaces generated by the decoder (ga(b)) may be defined relative to their respective transmitted images fa(b).

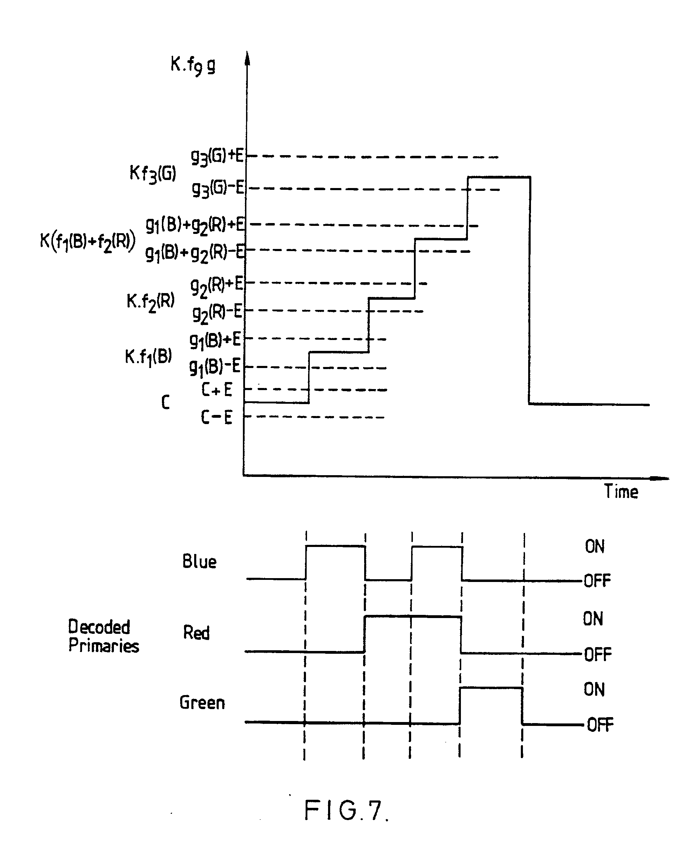

We require    $|K \cdot fa(b) - ga(b)| \leq E$
ie                  $-E \leq K \cdot fa(b) - ga(b) \leq E$
so                 $ga(b) - E \leq K \cdot fa(b) \leq ga(b) + E$
Therefore $K.fa(b) \rightarrow [ga(b) - E, ga(b) + E]$
This is illustrated in Figure 7.

7

For example, this general relationship is applied to the example of encoding colour information only for RGB TTL as described hereinbefore. In this scheme a unit value $(x^n)$ of 200 mV was chosen with a black level of 1 volt, so that the video peak-to-peak level (White Level – Black) = 1.4 volts.

For convenience it is assumed that the decoding circuitry requires a 2.8 v peak-to-peak signal and video Black Level (c) = 1 v.

In order to ascertain the unit value required in the decoder mappings ga(b) :

White Level – Black = 2.8 volts

ie $g_1(B) + g_2(R) + g_3(G) - c = 2.8$ volts

since $4x^n = 2y^{n+p} = z^{n+q}$

then 2.8/7 volts = 400 mV

which gives $g_1(B) = 400$ mV, $g_2(R) = 800$ mV, $g_3(G) = 1.6$ v.

The nominal gain requirement (scaling factor K) may be derived from any image since :

$$K \cdot fa(b) \rightarrow ga(b)$$

Therefore

$$k = ga(b)/fa(b)$$
$$\text{ie } g_1(B)/f_1(B) = 400/200 = 2$$

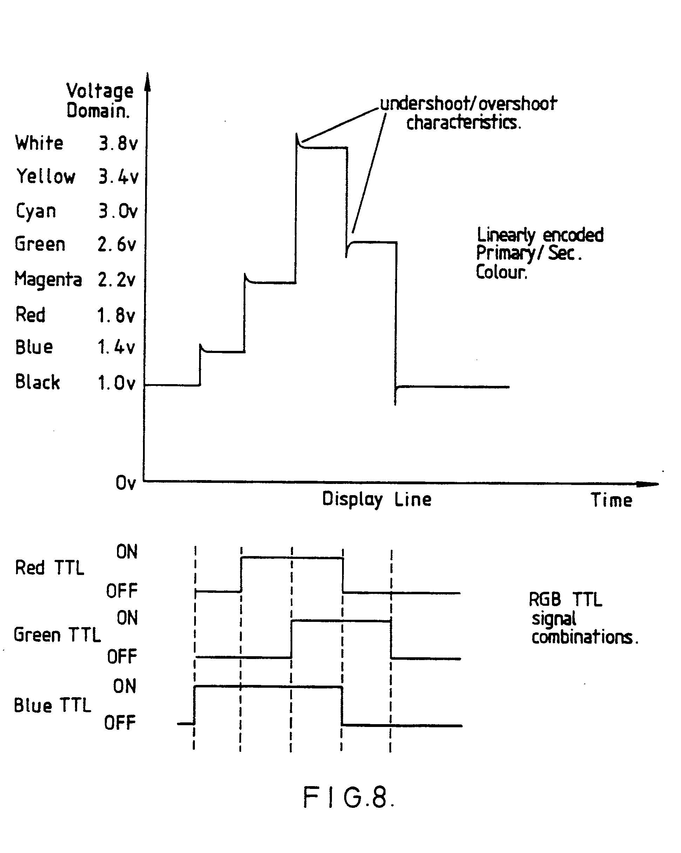

The unit value $(x^n)$ is 400 mV. In order to avoid decoding errors, adjacent boundaries must be determined empirically as these are dependant on the decoder high frequency characteristics. For example $E < u/4 = 100$ mV is chosen. Figure 8, illustrates how the encoded signal is decoded into its discrete time related signal form by merely comparing the image space [ga(b) + E, ga(b) – E] with the encoded signal $K \cdot fa(b)$.

In some applications, dependant on the decoding implementation, it may be unnecessary to provide both an upper (ga(b) + E) and lower bound (ga(b) – E) on the decoding images (ga(b)). Either may be chosen and in such circumstances the Black Level (c) incorporated in the functions of ga(b) may be varied to reposition the boundaries between images.

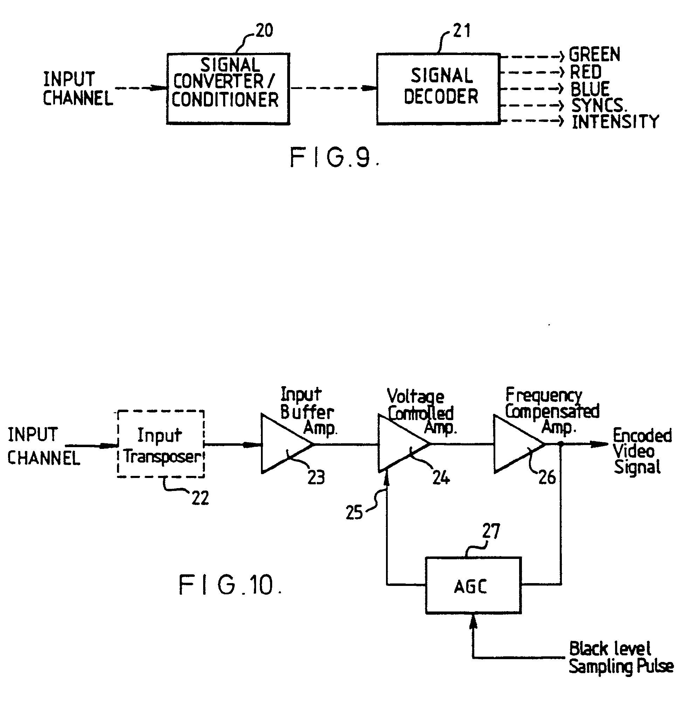

Figure 9 illustrates the decoder 4 of Figure 5. The decoder comprises a signal converter/conditioner for receiving an encoded signal from the transmission medium and performing any conversion and/or conditioning necessary to render the encoded signal suitable for the decoding process. The output signal from the converter/conditioner 20 is supplied to a signal decoder 21 which performs the amplitude division demultiplexing in order to supply the individual signals to individual output channels for the receiver.

The signal converter/conditioner 20 is shown in more detail in Figure 10 and comprises an optional input transposer 22 for converting the transmission signal energy into an electrical signal which is supplied to an input buffer amplifier 23. The transposer 22 may comprise a fibre optic receiver for use with an optical fibre or a differential amplifier for use with an electrical differential signal. In the case of a coaxial cable, this may be connected directly to the input buffer amplifier 23.

Because of the nature of amplitude or voltage division multiplexing, it is essential that direct voltages within the decoder are maintained at an accurate level irrespective of the video content or signal energy. The input buffer amplifier 23 is a precision-clamped high input impedance low output impedance unity gain amplifier which is capable of constantly clamping a video signal to within a few millivolts of a given DC level.

The output of the input buffer amplifier 23 is connected to the signal input of a voltage controlled amplifier 24 whose gain or attenuation is dependent on a control supplied to its control voltage input 25. The output of the amplifier 24 is supplied via a frequency compensated amplifier 26 as the output encoded video signal and to the automatic gain control circuit 27. The output of the circuit 27 is supplied to the control input 25 of the voltage controlled amplifier 24.

The automatic gain control circuit 27 also receives black level sampling pulses, in response to which it samples the black level amplitude |f(S) – c| of the signal being supplied to the decoding circuitry from the frequency compensated amplifier 26. The amplifier 26 provides amplification and has a high frequency manual gain adjustment which can be adjusted to provide either gain or attenuation to the high frequency components of the encoded signal in order to compensate for effects of the transmission medium between the encoder and the decoder.

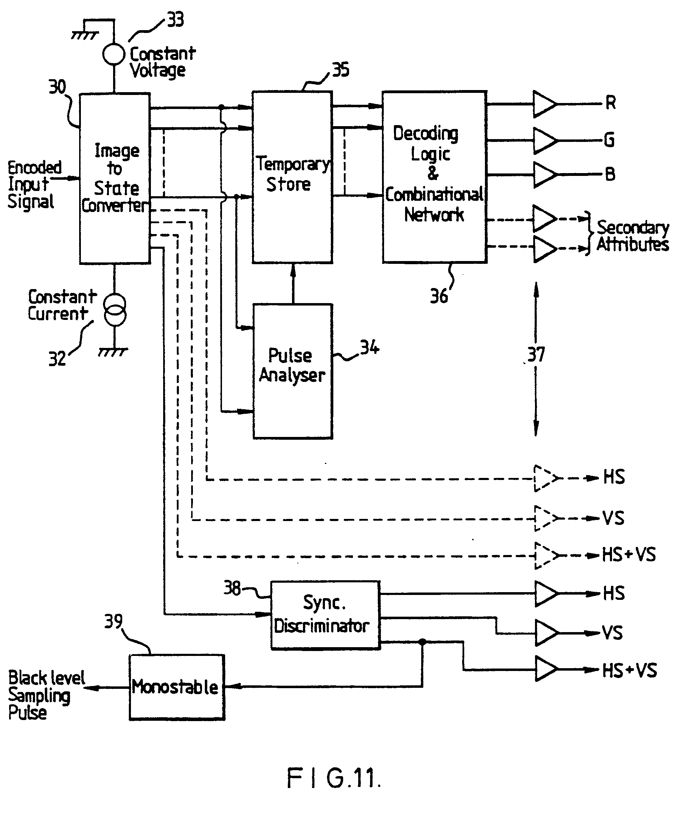

The signal decoder 21 is shown in more detail in Figure 11 and comprises an image-to-state converter (ISC) 30 which is responsible for generating the decoding images (ga(b)) and comparing them with the incoming signal. From this operation it provides a number of outputs relative to the total number of images generated in the amplitude domain. The precision with which this block must function is a property of the unit value chosen for the decoder system. It is invariably essential that voltage references (or images) generated are accurately maintained despite deviations from normal operating temperatures, and the ISC includes temperature-stable constant current and voltage sources 32 and 33.

All of the outputs of the ISC 30 except for information mapped to the sync image plane are fed into a Pulse Analyser 34 which monitors and conditions the ISC outputs until it senses that valid changes have occurred in the ISC, at which time it writes the new information into a Temporary Store (TS) 35. The outputs of TS are continuously applied to a Decoding Logic and Combinational Network (DLCN) 36 where the real state information provided by the ISC is decoded and combined back into discrete primary colour information. The DLCN outputs are then buffered by low impedance drive amplifiers 37 before being fed to the receiver.

The information mapped to the sync image plane may not be just for picture positioning. Consequently a sync discriminator 38 which may be necessary to differentiate between horizontal and vertical syncs receives the state information from the ISC 30 and separates HS, VS and any other attribute into its own output channel. The broken lines from the ISC 30 illustrate that syncs may be generated with distinct images or in a composite form in a dedicated decoder design. A monostable 39 is provided to generate a predetermined pulse (Black Level Sample Pulse) starting from the trailing edge of sync to enable the AGC circuit 27 to sample a section of the encoded video back-porch ($|f(s) - c|$).

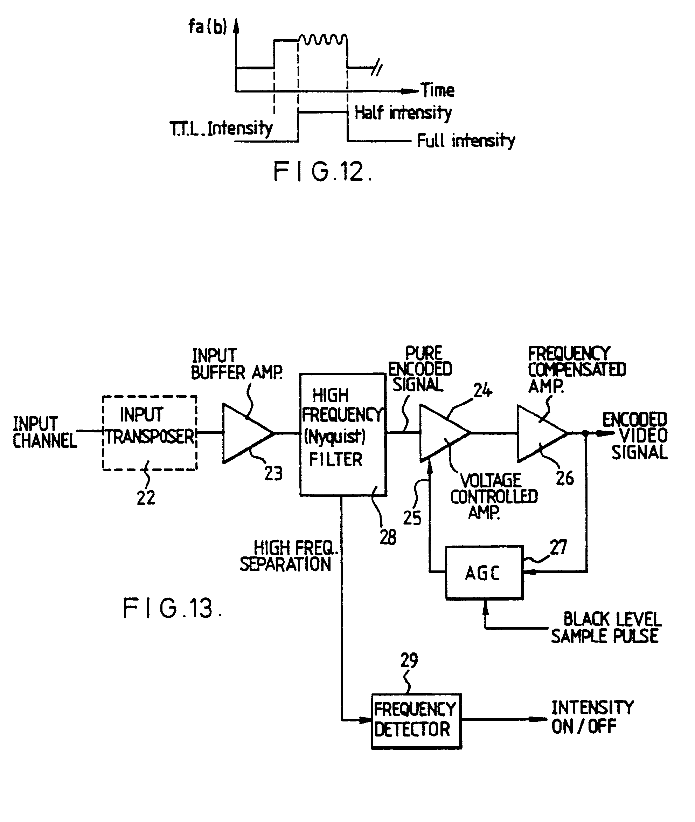

Figure 12 shows a waveform which may be used to provide intensity control. The intensity signal itself is provided from a source in real-time as a discrete binary signal, indicating either full or half intensity. The signal accompanies the primary colours (RGB), their direct correlation providing the means for initiating intensity on or off. The intensity signalling feature may be incorporated within the combination network 11 of the encoder 1 shown in Figure 5. A high frequency oscillator output is combined with the image currently generated whenever the input intensity signal is active. In this way the oscillation becomes superimposed upon the image.

It is necessary to ensure that the product of the scaling factor K and the amplitude of the oscillation is less than the error bound E placed on the images (ga(b)) generated in the decoder.

Figure 13 shows a modification to the decoder of Figure 10 to provide this type of intensity control.

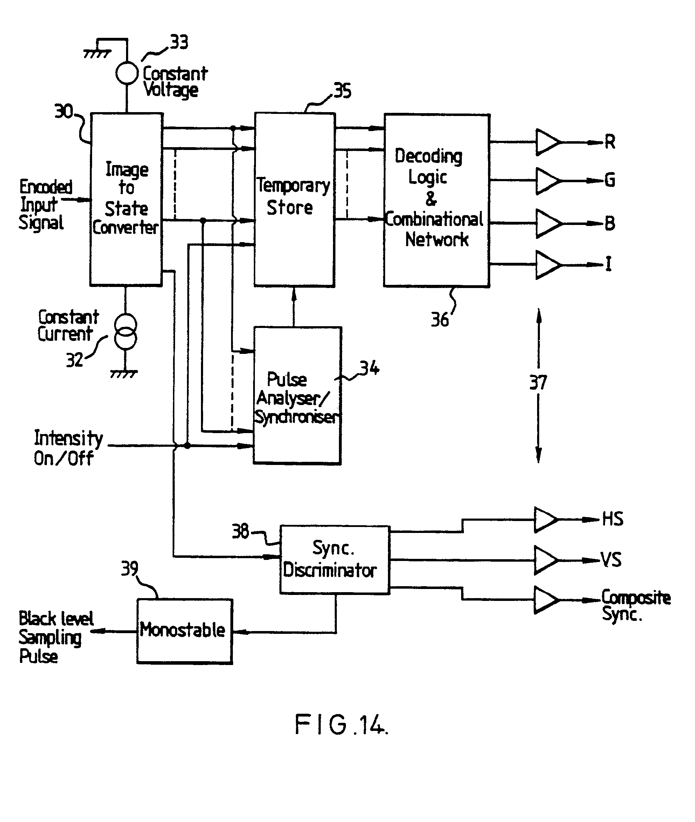

In order to identify the sinusoidal oscillation superimposed on the encoded signal image, it is ideally necessary for the oscillation frequency to be at least the Nyquist frequency of the original pixel clock which generates the primary colours. A Nyquist or High Frequency Filter 28 strips from the encoded signal the high frequency burst and provides the voltage controlled amplifier 24 with the basic encoded waveform. The filter 28 also supplies an amplified form of the high-frequency burst to a Frequency Detector 29 which in turn provides binary signalling indicating intensity half or full-on to the modified signal decoder shown in Figure 14.

In the decoding circuitry, the intensity signalling is synchronised by the pulse analyser 34 to the colour information to eliminate any phase delays which may occur. The information is then provided to the DLCN 36 to be combined with the RGB signals or provided separately to a receiver.

The only disadvantage with this particular technique is that certain transmission mediums may be unable to transmit such a signal due to the wide-bandwidth requirement as a result of using the high frequency sinusoid.

Intensity control may alternatively or additionally be provided by image mapping. The problem in providing a unique image f(i) for intensity control is complicated by the action of the discrete intensity control signal from the source, being active at the same time as the primary colour information (RGB). Therefore f(i) cannot be generated at exactly the same time as any other image fa(b) in the colour video image space unless an additional number of images are created for every combination of RGB and intensity.

A solution to this problem is provided by stealing small segments of time from the colour video image space and mapping that time into an intensity image f(i) when intensity signalling is required. The sync/intensity relationships may be defined as :

$$f(S) \leq f(i) < c$$

or

$$c < f(i) \leq f(S)$$

There are variations on the way in which time segments may be stolen from the image space in the encoder and the stolen information reconstituted in the decoder. However the type of implementation is basically dependant on the video resolution and technology available for decoding but relies on the principle described. One of the simplest schemes will be described to demonstrate the principle involved.

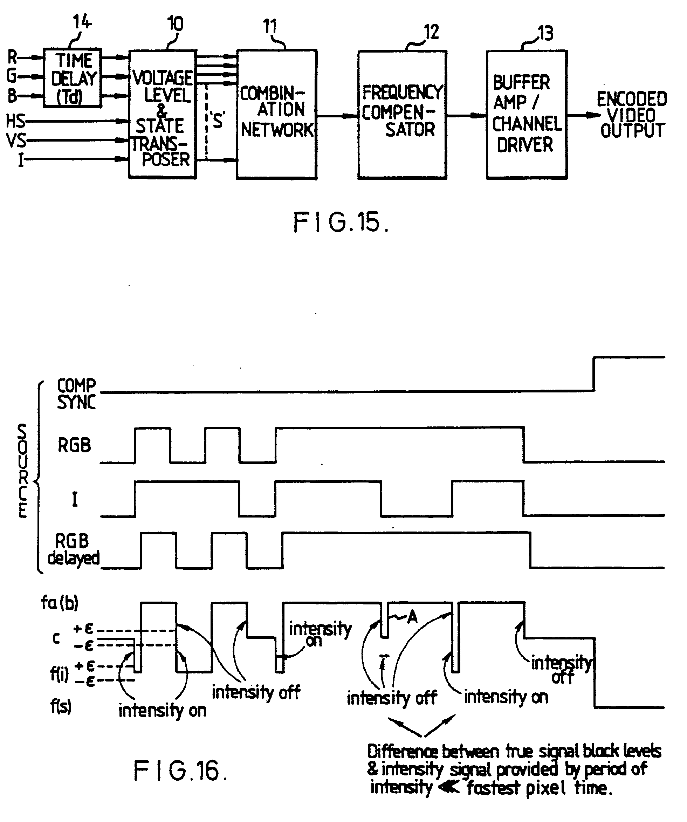

The encoder components and principle of encoding/decoding are the same as those used in the basic RGB TTL scheme described hereinbefore with the addition of an extra image space f(i) for intensity whereby f(S) < f(i) < c and a delay path for each of the primaries RGB by means of a time delay 14 as shown in Figure 15.

The purpose of providing a time delay (Td) between the intensity signal and colour primaries is to preserve the width of single-pixel information when intensity signalling is combined with the encoded waveform. This is particularly necessary with high-resolution video since the pixel information may be too fast to process and analyse. Under this condition, the encoder no longer produces a black-level image when intensity is 'on' but steals the black-level time and maps it into the intensity plane [f(i) + E, f(i) − E].

The decoder is able to recognise that an image is being generated outside of the image space bound by the summation of primary mappings and therefore generates no colour signals (black). Figure 16 illustrates the minimum duration of f(i) = Td. This component Td is essential in the decoding process and should be arranged to be substantially shorter in time than the fastest pixel rate. In this way, the decoder is able to differentiate between true colour information and a change of intensity in a continuous colour as illustrated at (A) in Figure 16.

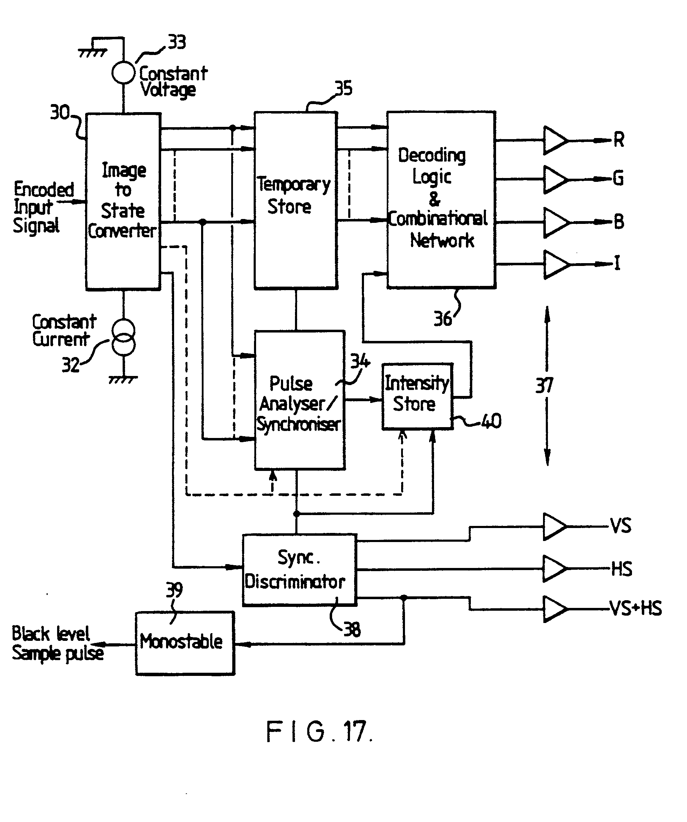

The mechanism for switching intensity 'off' is provided by the pulse analyser 34 sensing colour changes from the ISDC 30. Whenever a colour change occurs and the image f does not fall into the interval [f(i) + E, f(i) − E], then the pulse analyser 34 effectively signals the DLCN 36 to switch intensity 'off' via an intensity store 40 (Figure 17). The DLCN is then responsible either for adding intensity to the RGB outputs or for providing signalling by a separate intensity control line.

## Claims

1. An encoder having a plurality of inputs for receiving a plurality of input signals (R, G, B, HS, VS, I) ;

an output for providing an encoded output signal, such that the encoder (10-13) is arranged to perform amplitude division multiplexing of the input signals so as to provide the encoded output signal ;

means for performing a mapping comprising

$$f_1(A_1) + f_2(A_2) + f_3(A_3)$$

of the input signals into the voltage domain

where $A_1$, $A_2$, $A_3$ are video primary colour signals (B, R, G respectively) and are for controlling illumination of sequentially illuminated discrete colour image elements and $f_1$, $f_2$ and $f_3$ are isomorphic functions with non-intersecting images ; and

means for mapping an intensity control signal (I) to an image, which does not intersect the images of $f_1$, $f_2$, and $f_3$, during a plurality of discrete time periods, characterised in that

said encoder further comprises a time delay circuit (14) arranged to delay the video primary colour signals (R, G, B) prior to amplitude division multiplexing and the mapping means is arranged to map the intensity control signal during the delay period of the time delay circuit (14) following the start of each discrete colour image element.

2. An encoder as claimed in claim 1, characterized in $f_1$, $f_2$, and $f_3$ are the functions of multiplication by $x^n = c$, $y^{n+p} + c$, and $z^{n+q} + c$, respectively, where x, y, x, n, p, and q are real numbers and c is a constant and represents black level.

3. An encoder as claimed i claim 2, characterized in that $4x^n = 2y^{n+p} = z^{n+q}$.

4. A video signal transmission system comprising at least one encoder as claimed in claim 1 including means for controlling the period of illumination of the image elements ; and at least one decoder (30-39).

5. A system as claimed in claim 4, characterized in that the controlling means superimposes a burst of relatively high frequency oscillations on the encoded output signal and the decoder includes means (28, 29) for detecting the burst of oscillations.

6. A system as claimed in claim 4, characterized in that the controlling means comprises pulse width modulation means.

## Ansprüche

1. Kodierer mit mehreren Eingängen zur Aufnahme mehrerer Eingangssignale (R, G, B, HS, VS, I) ;

einem Ausgang zum Abgeben eines kodierten Ausgangssignals derart, daß der kodierer (10-13) dazu eingerichtet ist,

eine Amplitudenteilungsmultiplexierung der Eingangssignale auszuführen, um das kodierte Ausgangssignal zu erzeugen ;

einer Einrichtung zum Ausführen einer Zuordnung mit

$$f_1(A_1) + f_2(A_2) + f_3(A_3)$$

der Eingangssignale in den Spannungsbereich,

wobei $A_1$, $A_2$, $A_3$ Videoprimärfarbsignale (B, R bsw. G) sind und zum Regeln der Beleuchtung sequentiell beleuchteter diskreter Farbbildelemente dienen und $f_1$, $f_2$ und $f_3$ isomorphe Funktonen mit sich nicht überschneidenden Bildern sind, und

einer Einrichtung zum Zuordnen eines Intensitätssteuersignals I zu einem Bild, daß die Bilder $f_1$, $f_2$ und $f_3$ nicht schneidet, während einer Vielzahl diskreter Zeitperioden, **dadurch gekennzeichnet**, daß der Kodierer weiterhin eine Zeitverzögerungsschaltung (14) enthält, die dazu dient, die Videoprimärfarbsignale (R, G, B) vor dem Amplitudenteilungsmultiplexieren zu verzögern, und die Zuordnungseinrichtung dazu dient, das Intensitätssteuersignal während der Verzögerungsperiode der Zeitverzögerungsschaltung (14) im Anschluß an den Beginn eines jeden diskreten Farbbildelements zuzuordnen.

2. Kodierer nach Anspruch 1, **dadurch gekennzeichnet**, daß $f_1$, $f_2$ und $f_3$ die Funktionen der Multiplikation mit $x^n + c$, $y^{n+p} + c$ bzw. $z^{n+q} + c$ sind, wobei x, y, z, n, p und q reale Zahlen und c eine Konstante ist, die den Schwarzpegel repräsentiert.

3. Kodierer nach Anspruch 2, **dadurch gekennzeichnet**, daß $4x^n = 2y^{n+p} = z^{n+q}$.

4. Videosignalübertragungssystem, enthaltend wenigstens einen kodierer nach Anspruch 1 mit Einrichtungen zum Steuern der Beleuchtungsperiode der Bildelemente und wenigstens einen Dekodierer (30-39).

5. System nach Anspruch 4, **dadurch gekennzeichnet**, daß die Steuereinrichtung einen Burst von relativ hochfrequenten Schwingungen auf das kodierte Ausgangssignal überlagert und der Dekodierer eine Einrichtung (28, 39) zum Ermitteln des Schwingungsbursts enthält.

6. System nach Anspruch 4, **dadurch gekennzeichnet**, daß die Steuereinrichtung eine Pulsbreitenmodulationseinrichtung enthält.

**Revendications**

1. Un encodeur comportant plusieurs entrées pour recevoir plusieurs signaux d'entrée (R, G, B, HS, VS, I) ;

une sortie pour fournir un signal de sortie codé de sorte que l'encodeur (10-13) peut effectuer un multiplexage par répartition en amplitude des signaux d'entrée en vue de fournir le signal de sortie codé ;

un moyen pour effectuer un mappage comprenant

$$f_1(A_1) + f_2(A_2) + f_3(A_3)$$

des signaux d'entrée dans le domaine de tension

où $A_1$, $A_2$, $A_3$ sont des signaux vidéo de couleur primaire (respectivement B, R, G) servant à contrôler l'éclairage d'éléments d'image de couleur discrets éclairés séquentiellement et $f_1$, $f_2$ et $f_3$ sont des fonctions isomorphes avec des images non intersectantes ; ainsi que

un moyen pour mapper en image un signal de contrôle d'intensité (I), sans intersection avec les images de $f_1$, $f_2$ et $f_3$, pendant plusieurs périodes de temps discrètes, caractérisé en ce que ledit encodeur comprend en outre un circuit retard (14) destiné à temporiser les signaux vidéo de couleur primaire (R, G, B) avant le multiplexage par répartition en amplitude et en ce que le moyen de mappage est destiné à mapper le signal de contrôle de l'intensité pendant la période de temporisation du circuit retard (14) suivant le déclenchement de chaque élément d'image de couleur discret.

2. Un encodeur selon la revendication 1, caractérisé en ce que $f_1$, $f_2$ et $f_3$ sont les fonctions de la multiplication par $x^n + c$, $y^{n+p} + c$, et $z^{n+q} + c$, respectivement, où x, y, x, n, p et q sont des nombres réels et c est une constante et représente le niveau du noir.

3. Un encodeur selon la revendication 2, caractérisé en ce que $4x^n = 2y^{n+p} = z^{n+q}$.

4. Un système de transmission de signaux vidéo comprenant au moins un encodeur selon la revendication 1 comportant un moyen de contrôle de la période d'éclairage des éléments d'image ; et au moins un décodeur (30-39).

5. Un système selon la revendication 4, caractérisé en ce que le moyen de contrôle surimpose une salve d'oscillations de fréquence relativement élevée au signal de sortie codé et en ce que le décodeur comprend des moyens (28, 29) pour détecter la salve d'oscillations.

6. Un système selon la revendication 4 caractérisé en ce que le moyen de contrôle comprend un moyen de modulation de la durée d'impulsion.

F I G .1.

FIG.2.

EP 0 247 081 B1

F I G. 3.

FIG.4.

FIG.5.

FIG.6.

FIG.7.

F I G.8.

FIG.9.

FIG.10.

F I G.11.

FIG.12.

FIG.13.

FIG.14.

FIG.15.

FIG.16.

Difference between true signal black levels
& intensity signal provided by period of
intensity ≪ fastest pixel time.

F I G . 17.